# DEMANDE DE BREVET EUROPEEN

(11) **EP 0 751 547 A1**
(43) Date de publication de la demande: **02.01.1997**
(21) Numéro de dépôt: 96410069.7
(22) Date de dépôt: 10.06.1996
(51) Int. Cl.: H01H 71/10, F16B 11/00

(54) **Procédé de fabrication d'un appareil électrique multipolaire et appareil réalisé selon ce procédé**

(30) Priorité: 30.06.1995 FR 9508158
(71) Demandeur: SCHNEIDER ELECTRIC SA, 92100 Boulogne Billancourt (FR)
(72) Inventeur: Rinchon, Robert, Schneider Electric, 38050 Grenoble Cedex 09 (FR); Tallier, Jean-Baptiste, Schneider Electric, 38050 Grenoble Cedex 09 (FR)
(74) Mandataire: Ritzenthaler, Jacques

(57) **Abrégé**

L'invention concerne un procédé de fabrication d'un appareil électrique multipolaire comportant au moins deux modules assemblés par collage.

Ce procédé est caractérisé par le fait que cet assemblage est effectué au moyen d'une première colle structurale réticulable à deux composants, par exemple du type époxy, et d'une seconde colle thermofusible. Cet encollage mixte a l'avantage de permettre un assemblage rapide et efficace de modules unipolaires.

## Description

La présente invention concerne un procédé de fabrication d'un appareil électrique multipolaire comportant au moins deux modules unipolaires assemblés par collage.

Elle concerne également un appareil électrique multipolaire, comportant au moins deux modules unipolaires assemblés par collage selon le procédé de fabrication ci-dessus.

Les appareils électriques multipolaires tels que les petits disjoncteurs, les contacteurs, les coupe-circuits à fusibles ou similaires sont généralement réalisés par un assemblage rigide de plusieurs modules unipolaires. Le nombre de modules à assembler dépend de l'appareil que l'on veut fabriquer. La réalisation d'un appareil bipolaire nécessite l'assemblage de deux modules, celle d'un appareil tripolaire, l'assemblage de trois modules, etc.. Cet assemblage est souvent réalisé au moyen de rivets qui sont au nombre de quatre ou cinq et qui sont disposés de préférence aux angles des modules.

La mise en place de ces rivets est difficile, nécessite un outillage spécialisé et prend du temps. Pour pallier ces inconvénients, certains constructeurs ont tenté de réaliser l'assemblage par collage. La colle utilisée doit pouvoir assurer un assemblage rigide supportant des contraintes thermiques, notamment une certaine élévation de température sans pour autant perdre son pouvoir de liaison. Par ailleurs, il est important que la colle ait un temps d'ouverture relativement court pour que la cadence de production, qui est proportionnelle au temps de prise de la colle, puisse être portée à un rythme élevé. Les essais relatifs à un assemblage par collage, réalisés à ce jour, ce sont révélés plutôt négatifs en raison de l'incompatibilité des contraintes imposées évoquées ci-dessus.

La présente invention se propose de remédier à cet état de fait et d'apporter une solution efficace au problème de l'assemblage par collage de modules unipolaires pour réaliser des appareils multipolaires.

Ce but est atteint par le procédé selon l'invention, caractérisé en ce que l'on effectue cet assemblage au moyen de deux colles ayant des caractéristiques différentes, une première colle ayant un temps d'ouverture relativement long mais présentant une tenue mécanique élevée et une grande résistance aux contraintes thermiques, et une seconde colle ayant un temps d'ouverture relativement court et une tenue mécanique variable en fonction des contraintes thermiques auxquelles l'appareil peut être soumis.

Selon un mode de réalisation préférentiel, on utilise une première colle structurale réticulable à deux composants, par exemple du type époxy, qui présente une très bonne tenue aux contraintes thermiques et une seconde colle thermofusible à très faible temps d'ouverture.

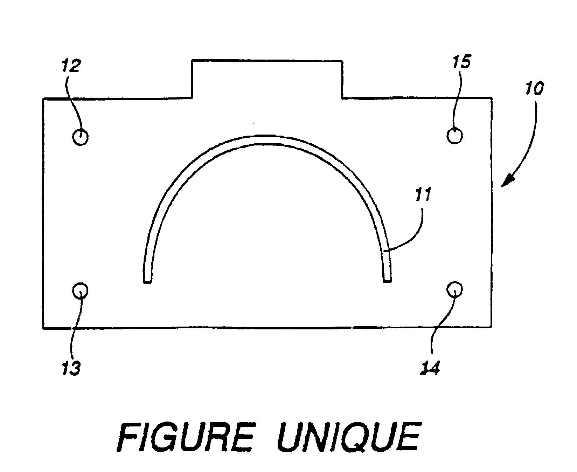

D'autres particularités et avantages du procédé et de l'appareil issu de ce procédé selon l'invention apparaîtront mieux à la description d'un exemple non limitatif de mise en oeuvre de ce procédé et en référence au dessin unique illustrant schématiquement la phase d'application des colles.

Pour réaliser cette opération d'assemblage, le cahier des charges suivant doit être respecté :
- l'assemblage doit être rigide, solide et durable;
- le joint de colle ne doit pas générer de surépaisseur incompatible avec les dimensions finales de l'appareil, sachant que l'épaisseur d'un appareil tripolaire à trois modules est, par exemple, de 18 mm et qu'un appareil bipolaire composé de deux modules est, par exemple, de 12 mm;
- le joint de colle ne doit présenter aucun bourrelet débordant sur le pourtour de l'appareil;
- l'appareil doit résister à des contraintes mécaniques et thermiques prédéterminées, sachant que la température de l'appareil en fonctionnement peut atteindre 80 à 100°C;
- l'assemblage des modules unipolaires doit pouvoir être effectué selon un processus industriel, et de ce fait les colles utilisées doivent pouvoir être déposées automatiquement;
- l'assemblage doit pouvoir être effectué à des cadences élevées, par exemple de l'ordre de 2700 appareils par heure;
- les appareils doivent pouvoir être manipulés instantanément, le temps de mise sous presse étant réduit au minimum afin que les cadences de production mentionnées ci-dessus puissent être tenues;
- les colles choisies doivent être compatibles avec la matière dont sont faits les boîtiers des modules;
- la qualité de l'assemblage doit être fiable et ne subir aucune dégradation dans le temps.

Le principe de l'assemblage des modules unipolaires qui composent l'appareil électrique multipolaire défini précédemment est basé sur l'utilisation de deux colles ayant des caractéristiques différentes, voire complémentaires, afin de concilier les contraintes opposées auxquelles ces appareils peuvent être soumis.

Selon un mode de réalisation préféré, la première colle est une colle structurale époxy à deux composants qui offre une haute résistance mécanique en traction et au vrillage, et un très bon comportement sous des contraintes thermiques jusqu'à environ 200°C. Elle peut en outre être utilisée avec des surfaces irrégulières du point de vue de la planéité. Lorsque la réticulation est complètement terminée, la liaison effectuée est irréversible. La seconde colle une colle thermofusible constituée d'un polymère solide qui devient fluide sous l'effet de la température. Elle est appliquée à une température comprise sensiblement entre 160 et 200°C et se solidifie en refroidissant au contact des parois des modules. La liaison obtenue avec cette colle est quasi instantanée, son temps d'ouverture étant très faible, de l'ordre de quelques secondes.

La première colle procure la rigidité de l'assemblage d'une manière quasi instantanée, ce qui permet d'atteindre des cadences d'assemblage élevées. La seconde colle procure la résistance de l'assemblage dans le temps sous les contraintes thermiques éventuelles auxquelles l'appareil est soumis dans son environnement de travail.

Comme le montre la figure unique, un module unipolaire 10, qui est disposé sur un carrousel d'assemblage ou sur une chaîne de montage, reçoit d'abord un cordon circulaire 11, s'étendant par exemple sur 210°, de ladite première colle appliquée au moyen d'une tête équipée d'un mélangeur statique. Ce cordon peut également être remplacé par des plots déposés par plusieurs têtes équipées dans ce cas de mélangeurs dynamiques.

Ensuite, on applique ladite seconde colle à prise rapide, par exemple, sous forme de quatre plots 12, 13, 14 et 15 déposés aux extrémités du module. Ce dépôt de colle s'effectue à la volée, vu que le temps d'ouverture est sensiblement égal à 4 secondes.

L'empilement d'un deuxième module unipolaire sur la face encollée d'un premier module est effectué immédiatement après ledit encollage, cet empilement suivi d'un pressage devant être réalisé pendant le temps d'ouverture de ladite première colle. Dans la pratique, cette opération prend en moyenne entre 1 et 1,5 seconde.

Pour améliorer l'énergie superficielle de la paroi encollée des modules unipolaires, et pour garantir une adhésion optimale des colles, une opération de flammage peut être intégrée en amont du procédé d'assemblage, avant l'encollage, pour amener cette énergie superficielle à environ 56 dynes/cm.

Cet encollage mixte permet d'assurer d'une manière simple et efficace l'assemblage des appareils électriques définis ci-dessus tout en respectant intégralement le cahier des charges imposé à cette fabrication.

## Revendications

1. Procédé de fabrication d'un appareil électrique multipolaire comportant au moins deux modules unipolaires assemblés par collage, caractérisé en ce que l'on effectue cet assemblage au moyen de deux colles ayant des caractéristiques différentes, une première colle ayant un temps d'ouverture relativement long mais présentant une tenue mécanique élevée et une grande résistance aux contraintes thermiques, et une seconde colle ayant un temps d'ouverture relativement court et une tenue mécanique variable en fonction des contraintes thermiques auxquelles l'appareil peut être soumis.

2. Procédé selon la revendication 1, caractérisé en ce que ladite première colle est une colle structurale réticulable à deux composants.

3. Procédé selon la revendication 2, caractérisé en ce que ladite première colle est du type époxy.

4. Procédé selon la revendication 1, caractérisé en ce que ladite seconde colle est thermofusible.

5. Procédé selon la revendication 1, caractérisé en ce que ladite première colle est déposée en plots au moyen d'un applicateur équipé de têtes alimentées par un mélangeur dynamique.

6. Procédé selon la revendication 1, caractérisé en ce que ladite première colle est déposée sous forme d'un cordon (11) au moins partiellement circulaire avec une tête équipée d'un mélangeur statique.

7. Procédé selon la revendication 1, caractérisé en ce que ladite seconde colle est déposée sous de plots (12, 13, 14, 15) sensiblement aux extrémités d'un module.

8. Procédé selon la revendication 7, caractérisé en ce que le dépôt de ladite seconde colle s'effectue à la volée.

9. Procédé selon la revendication 1, caractérisé en ce que l'empilement des modules unipolaires s'effectue immédiatement après le dépôt de ladite seconde colle.

10. Procédé selon la revendication 1, caractérisé en ce qu'il comporte une phase de flammage effectuée antérieurement à l'encollage.

11. Appareil électrique multipolaire, comportant au moins deux modules unipolaires assemblés par collage, caractérisé en ce que lesdits modules sont assemblés par deux colles ayant des caractéristiques différentes, une première colle ayant un temps d'ouverture relativement long mais présentant une tenue mécanique élevée et une grande résistance aux contraintes thermiques, et une seconde colle ayant un temps d'ouverture relativement court et une tenue mécanique variable en fonction de contraintes thermiques.

12. Appareil selon la revendication 11, caractérisé en ce que ladite première colle est une colle structurale réticulable à deux composants du type époxy, et en ce que ladite seconde colle est thermofusible.
